# EUROPÄISCHE PATENTSCHRIFT

(11) **EP 0 884 514 B1**
(45) Veröffentlichungstag und Bekanntmachung des Hinweises auf die Patenterteilung: **28.11.2001**
(21) Anmeldenummer: 98110252.8
(22) Anmeldetag: 05.06.1998
(51) Int. Cl.: F16K 37/00

(54) **Durchflussmesser**
Flowmeter
Débitmètre

(30) Priorität: 11.06.1997 CH 141397
(43) Veröffentlichungstag der Anmeldung: 16.12.1998
(73) Patentinhaber: FS Engineering Fritz Spiess, 8918 Unterlunkhofen (CH)
(72) Erfinder: Spiess, Fritz, 8918 Unterlunkhofen (CH)
(74) Vertreter: Kägi, Otto Patentanwalt

(56) Entgegenhaltungen:
- AT-B- 369 150
- DE-A- 3 515 752
- DE-U- 9 404 156
- GB-A- 1 401 614

## Beschreibung

Die Erfindung betrifft einen Durchflussmesser, insbesondere für Warmwasser-Heizanlagen, mit einem Messteil sowie einem Anzeigeteil mit transparentem, rohrförmigem Schauglas, in dessen Bohrung eine mit dem Messteil verbundene Anzeigestange längsbeweglich geführt ist.

Durchflussmesser dieser Art für strömende Flüssigkeiten sind allgemein bekannt (vgl. DE-U-9404156 und werden häufig bei Warmwasserheizungen eingebaut, um die eingestellten Teilströme des Heizmediums in den verschiedenen Leitungssträngen bzw. Zweigleitungen anzuzeigen und während dem Betrieb überwachen zu können. Die Anzeigeskala, an der die jeweilige Stellung der Anzeigestange ablesbar ist, wird bei bekannten Ausführungen solcher Durchflussmesser auf der Oberfläche des Schauglases in einer Linie angebracht. Dabei ist jedoch ein bequemes Ablesen der Skala am (üblicherweise senkrecht vom Leitungsrohr abstehenden) Schauglas oft nicht gewährleistet, weil bei der Montage des Durchflussmessers die Drehlage des Schauglases unbestimmt bzw. die Skala nicht zur gewünschten Blickrichtung hin orientiert ist. Besonders störend ist dies, wenn an einem Vorlauf-Verteilrohr oder Rücklauf-Sammelrohr mehrere Durchflussmesser für die einzelnen Zweigleitungen nahe benachbart angeordnet sind. Es ist zwar möglich, die Skalenstriche am Schauglas rings umlaufend anzubringen, wobei am Umfang mehrere zugehörige Zahlenreihen erforderlich sind; diese Massnahme bedingt einen nicht unerheblichen Aufwand für das Anbringen der Skala, sei es im Spritzgussverfahren oder durch Bedrucken der umlaufenden Oberfläche.

Aufgabe der Erfindung ist es, diese Nachteile bekannter Durchflussmesser zu beseitigen. Es soll eine Konstruktion vorgeschlagen werden, die in jeglicher Einbausituation ein einwandfreies, bequemes Ablesen der Messwerte gewährleistet.

Diese Aufgabe wird erfindungsgemäss dadurch gelöst, dass um das Schauglas herum ein im wesenlichen hülsenförmiger Skalenträger angeordnet ist, der bezüglich des Schauglases axial fixiert, jedoch dreheinstellbar ist und der einen seitlichen, die Sicht auf Schauglas und Anzeigestange freigebenden Ausschnitt aufweist, wobei dem Schauglas benachbarte Schnittflächen des Ausschnittes eine Skalenbeschriftung aufweisen.

Ein solcher Skalenträger ist in verschiedenen geeigneten Varianten einfach und billig herzustellen. Durch Einstellen von dessen Drehlage am fertig montierten Durchflussmesser kann in jeder Einbausituation, auch bei engen Platzverhältnissen, eine optimale Ablesbarkeit erreicht werden. Indem nun das Schauglas selbst nicht mehr beschriftet werden muss, kann dieses mit geringerem Aufwand gefertigt werden.

Nachstehend werden verschiedene Ausführungsbeispiele der Erfindung im Zusammenhang mit der Zeichnung näher erläutert.
- Fig. 1: ist die teilweise geschnittene Seitenansicht eines an einem Sammelrohr montierten Durchflussmessers gemäss einem ersten Beispiel;
- Fig. 2: ist die Stirnansicht und
- Fig. 3: ein Axialschnitt des Skalenträgers nach Fig. 1;
- Fig. 4: zeigt ein weiteres Ausführungsbeispiel eines an einem Sammelrohr montierten Durchflussmessers, je zur Hälfte in Ansicht und als Vertikalschnitt;
- Fig. 5: ist die Draufsicht bzw. ein Schnitt auf der Höhe V der Anordnung nach Fig. 4, und
- Fig. 6: ist ein Horizontalschnitt auf der Höhe der Linie VI-VI in Fig. 4.

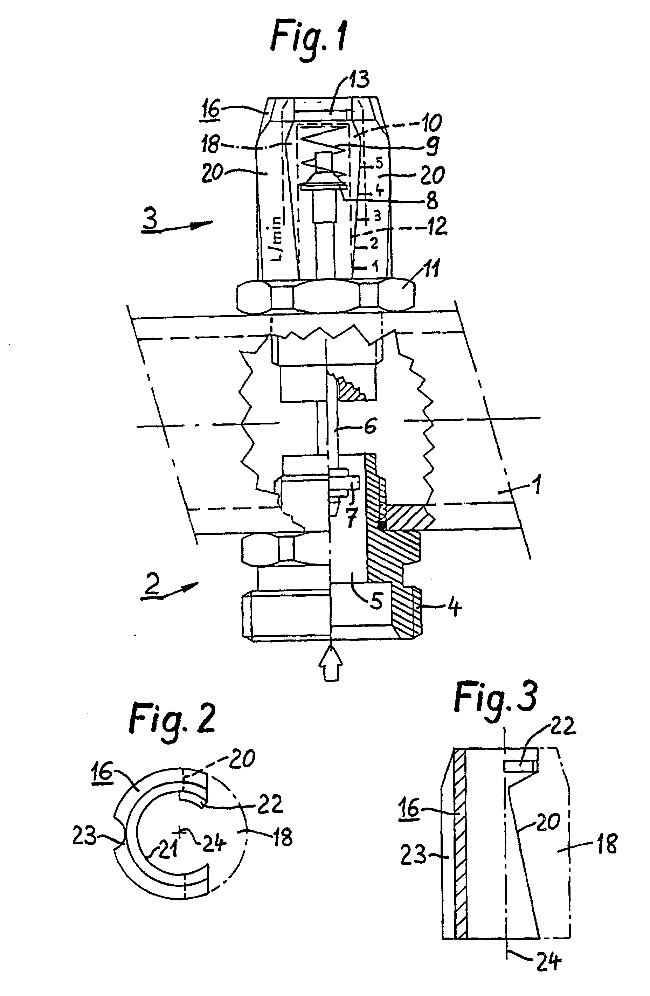

Der in Fig. 1 als Beispiel dargestellte Durchflussmesser, bestehend aus Messteil 2 und Anzeigeteil 3, ist an einem Rücklauf-Sammelrohr 1 einer Warmwasser-Heizungsanlage montiert und misst die Strömung gemäss Pfeilrichtung im Rücklauf eines einzelnen Zweigstranges. Typischerweise sind auf dem Sammelrohr 1 mehrere solche Durchflussmesser für verschiedene Zweigstränge nebeneinander angeordnet. Der in das Sammelrohr 1 dicht eingeschraubte Messteil 2 weist ein Aussengewinde für den Anschluss einer (nicht dargestellten) Rücklaufleitung auf. In an sich bekannter Weise befindet sich in der Messbohrung 5 ein von einer Anzeigestange 6 getragener Prallteller 7, dessen Stellung entlang der Messbohrung vom jeweiligen Durchfluss eindeutig abhängt.

Der Anzeigeteil 3 ist gegenüber dem Messteil 2 oben auf dem Sammelrohr 1 montiert. Er weist einen mit dem Rohr 1 dicht verschraubten Führungsteil 11 auf, der das rohrförmige, aus transparentem Material gefertigte Schauglas 10 trägt. Die Anzeigestange 6 ist in einer Längsbohrung des Führungsteils 11 gleitend geführt. Sie trägt nahe ihrem oberen Ende den scheibenförmigen Zeiger 8, der in der Bohrung 12 des Schauglases auf und abgleitet. Zwischen dem Grund der Bohrung 12 und dem Zeiger 8 bzw. der Anzeigestange ist die Rückholfeder 9 abgestützt. - Der grundsätzliche Aufbau und die Funktionsweise eines derartigen Durchflussmessers sind soweit bekannt und brauchen nicht weiter beschrieben zu werden.

Wie aus Fig. 1 ersichtlich, trägt jedoch das Schauglas 10 selbst keine Ableseskala. Vielmehr ist ein separater, im wesentlichen hülsenförmiger Skalenträger 16 mit der Längsachse 24 vorgesehen, der um das Schauglas 10 herum angeordnet ist und einen seitlichen Ausschnitt 18 aufweist. Die Gestalt des Skalenträgers 16 nach Fig. 1 geht im Detail aus den Fig. 2 und 3 hervor, in denen die "ergänzte" Hülsenform strichpunktiert angedeutet ist. Der Ausschnitt 18 gewährt die Sicht auf das Schauglas 10 und die Anzeigestange 6 mit Zeiger 8 von der Seite aus einem gewissen Winkelbereich. Infolge des Ausschnittes 18 vorhandene Schnittflächen 20, die dem Schauglas 10 benachbart sind, weisen eine Skalenbeschriftung auf, an der die Zeigerstellung bzw. der Durchflusswert ablesbar ist. Die hier verwendeten Begriffe "Ausschnitt" und "Schnittflächen" sind natürlich rein geometrisch in Bezug auf die Hülsenform zu verstehen; selbstverständlich kann der Skalenträger 16 als Fertigteil ohne Schneidvorgang, z.B. aus Kunststoff im Spritzgussverfahren hergestellt werden, wobei auch das Anbringen der Skalenbeschriftung im selben Arbeitsgang keine Schwierigkeiten bereitet.

Der Skalenträger 16 ist bezüglich des Schauglases 10 axial fixiert, jedoch in der Drehstellung einstellbar. Gemäss dargestelltem Beispiel weist das Schauglas 10 zu diesem Zweck nahe seinem oberen Ende eine umlaufende Ringnut 13 auf. In diese greift ein Nocken 22 des Skalenträgers ein, der von dessen (dem Durchmesser des Schauglases entsprechenden) Innenfläche 21 absteht. Der über die ganze Höhe angeschnittene Skalenträger ist im Durchmesser federnd, unterstützt durch eine dem Ausschnitt 18 gegenüberliegende Längsnut 23. Beim Zusammenbau kann der Skalenträger einfach von oben (axial) auf das Schauglas geschoben werden. Der Nocken 22 gleitet zuletzt über das etwas angeschrägte obere Ende des Schauglases und schnappt dann in die Ringnut 13 ein.

Wenn der Anzeigeteil 3 des Durchflussmessers gegenüber dem Messteil 2 montiert wird, braucht beim Festziehen des Führungsteils 11 nicht auf die sich ergebende Drehlage geachtet zu werden, weil der Skalenträger 16 leicht nachträglich in die zum Ablesen der Skala geeignete und den Einbauverhältnissen entsprechende Drehstellung gebracht werden kann. Es kann zweckmässig sein, wenn die die Skalenbeschriftung tragenden Schnittflächen 20 bezüglich der Längsachse 24 geneigt sind, wie deutlich aus Fig. 3 ersichtlich ist. Die beidseitigen Schnittflächen 20 brauchen nicht in derselben Ebene zu liegen, sondern können entgegen dem dargestellten Beispiel auch zueinander geneigt, z.B. (in Fig. 2 gesehen) etwa radial zur Achse 24 hin gerichtet sein.

Derartige Durchflussmesser können selbstverständlich auch mit umgekehrter Strömungsrichtung im Messrohr 5 betrieben werden; eine ähnliche Anordnung wie nach Fig. 1 ist dann z.B. am Vorlauf-Verteilrohr einer Heizungsanlage montiert, wobei am Gewindestutzen 4 eine Vorlauf-Zweigleitung angeschlossen ist. Da in diesem Fall die Strömung den Prallteller 7 von oben beaufschlagt, wird im Unterschied zu Fig. 1 ein Skalenträger 16 verwendet, dessen Skala von oben nach unten verläuft, und die Rückholfeder 9 muss unterhalb dem Zeiger 8 eingesetzt und unten am Führungsteil 11 abgestützt sein.

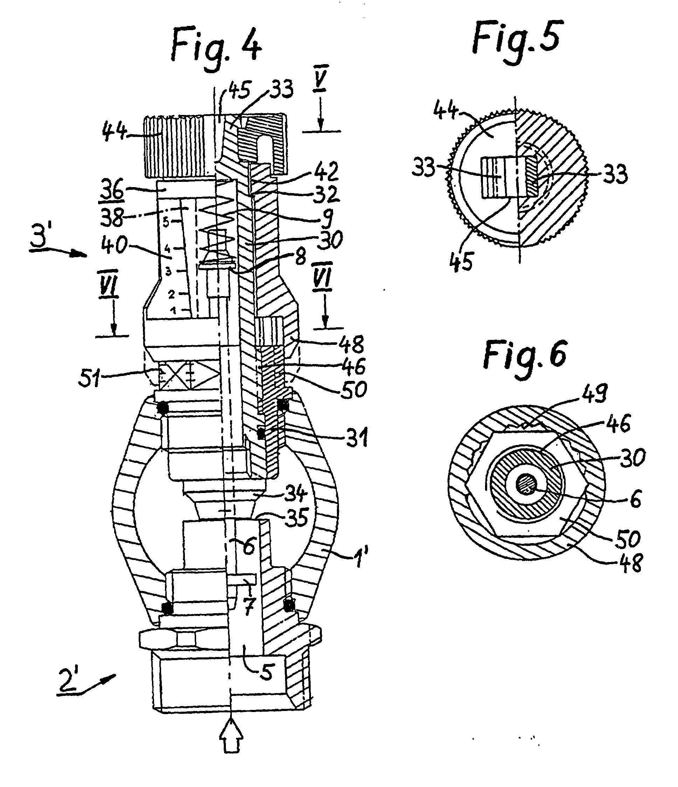

Beim weiteren Ausführungsbeispiel eines Durchflussmessers nach Fig. 4, 5 und 6 sind wiederum der Messteil 2' und der Anzeigeteil 3' auf einem Rücklauf-Sammelrohr 1' montiert. Die Teile 5 bis 9 in Fig. 4 entsprechen im wesentlichen den mit gleichen Bezugszahlen bezeichneten Teilen des vorangehenden Beispiels, und auch die Wirkungsweise des Durchflussmessers ist grundsätzlich gleich wie vorstehend beschrieben und bekannt. Im vorliegenden Fall ist jedoch der Durchflussmesser baulich kombiniert mit einem Einstellventil (mit Verschlusskörper 34 und Ventilsitz 35) für die zu messende Strömung.

Der Führungsteil 31 des Anzeigeteils 3' ist wiederum mit dem Rohr 1' dicht verschraubt und mittels Sechskant 50 festgezogen. Das Schauglas 30 ist jedoch mit dem Führungsteil 31 nicht starr verbunden, sondern als drehbare, steigende Spindel ausgebildet und trägt am unteren Ende den Ventil-Verschlusskörper 34. Das Spindelgewinde (Aussengewinde am Schauglas 30, Innengewinde am Führungsteil 31) ist mit 46 bezeichnet. Zur Drehverstellung der Spindel bzw. des Schauglases dient ein gerändelter Ring 44. Dieser weist eine zentrische, z.B. rechteckige oder quadratische Ausnehmung 45 auf, in die zwei federnde Lappen 33 eingreifen, die zwecks Schnappbefestigung des Ringes 44 vom oberen Ende des Schauglases 30 abstehen.

Der das Schauglas 30 umgebende, etwa hülsenförmige Skalenträger 36 ist ebenfalls abweichend vom vorangehenden Ausführungsbeispiel gestaltet. Ein seitlicher, die Sicht auf Schauglas und Anzeigestange freigebender Ausschnitt 38 bildet (z.B. geneigte) Schnittflächen 40, welche die Skalenbeschriftung tragen. Der Ausschnitt 38 erstreckt sich nicht über die gesamte Höhe des Skalenträgers 36, sondern lässt oben und unten umlaufende, geschlossene Ringpartien bestehen. Eine obere, radial einspringende Partie 42 am Skalenträger liegt auf einer radialen Schulter 32 am Schauglas 30 auf. Ferner übergreift der Ring 44 das obere Ende des Skalenträgers 36. Damit ist der Skalenträger am Schauglas axial fixiert, aber drehbar geführt. Unten bei 48 ist der Skalenträger glockenartig erweitert und innen mit einer Verzahnung 49 versehen, die über den Sechskant 50 des Führungsteils 31 greift.

Wenn also mittels des Ringes 44 die steigende Schauglas-Spindel 30 gedreht wird, um mit dem Ventil 34, 35 den Durchfluss einzustellen (der gleichzeitig gemessen und angezeigt wird), so verschiebt sich der Skalenträger 36 mit der Spindel axial, behält aber seine Drehstellung bei. Eine für die optimale Skalenablesung geeignete, der Einbausituation angepasste Drehorientierung wird bei der Montage des Durchflussmessers eingestellt, solange der Ring 44 noch nicht aufgeschnappt ist und bei angehobenem Skalenträger die Verzahnung 49 über dem Sechskant 50 gedreht werden kann. Im Betrieb behält der Skalenträger dann die eingestellte Orientierung bei.

Aus Fig. 4 ist eine am Sechskant 50 angebrachte Hilfsskala 51 ersichtlich, deren Teilung der Steigung des Gewindes 46 entspricht und die z.B. durch Einkerbung der Sechskant-Ecken erzeugt werden kann. An der Stellung der Unterkante der den Sechskant 50 übergreifenden Partie 48 lässt sich mittels der Skala 51 die jeweiliege Stellung des Ventils 34, 35 wenigstens näherungsweise ablesen.

## Patentansprüche

1. Durchflussmesser, insbesondere für Warmwasser-Heizungsanlagen, mit einem Messteil (2, 2') sowie einem Anzeigeteil (3, 3') mit transparentem, rohrförmigem Schauglas (10, 30), in dessen Bohrung (12) eine mit dem Messteil verbundene Anzeigestange (6) längsbeweglich geführt ist,
**gekennzeichnet durch** einen im wesentlichen hülsenförmigen, um das Schauglas (10, 30) herum angeordneten Skalenträger (16, 36), der bezüglich des Schauglases axial fixiert, jedoch dreheinstellbar ist und der einen seitlichen, die Sicht auf Schauglas und Anzeigestange freigebenden Ausschnitt (18, 38) aufweist, wobei dem Schauglas (10, 30) benachbarte Schnittflächen (20, 40) des Ausschnittes eine Skalenbeschriftung aufweisen.

2. Durchflussmesser nach Anspruch 1, **dadurch gekennzeichnet, dass** das Schauglas (10, 30) eine Ringnut (13) oder eine umlaufende, radiale Schulter (32) aufweist, in bzw. an der eine radial einspringende Partie (22, 42) des Skalenträgers (16, 36) gleitend geführt ist.

3. Durchflussmesser nach Anspruch 2, **dadurch gekennzeichnet, dass** der Skalenträger (16)über die ganze Höhe angeschnitten und, im Durchesser federnd, auf das Schauglas (10) aufschnappbar ist.

4. Durchflussmesser nach Anspruch 1, dass die beschrifteten Schnittflächen (20, 40) am Skalenträger (16, 36) bezüglich seiner Längsachse (24) geneigt sind.

5. Durchflussmesser nach einem der vorangehenden Ansprüche, **dadurch gekennzeichnet, dass** das Schauglas (30) als drehbare, steigende Spindel ausgebildet und in einem feststehenden, mit Innengewinde (46) versehenen Führungsteil (31) gelagert ist, wobei der Skalenträger (36) am Führungsteil axial verschiebbar und in der Drehlage einstellbar geführt ist, und dass das dem Messteil (2') zugekehrte Ende des Schauglases den Verschlusskörper (34) eines den gemessenen Durchfluss steuernden Ventils (34, 35) trägt.

## Claims

1. Flowmeter, designed particularly for water heating systems, comprising a measuring part (2, 2') and a display part (3, 3'), which itself comprises a transparent, tubular inspection glass (10, 30) and an indicator rod (6) which is coupled with the measuring part and which moves longitudinally in the bore (12) of the inspection glass, **characterised by** a basically sleeve-shaped scale support (16, 36) which fits around the inspection glass (10, 30) and is fixed axially in relation to it, but can be rotated, and which has a lateral aperture (18, 38) providing a view of the inspection glass and indicator rod, the cut faces (20, 40) of the aperture adjacent to the inspection glass (10, 30) bearing scale markings.

2. Flowmeter according to claim 1, **characterised by** the fact that the inspection glass (10, 30) has an annular groove (13) or an annular, radial shoulder (32) into, or respectively onto, which a radially inward protruding section (22, 42) of the scale support (16, 36) is sliding.

3. Flowmeter according to claim 2, **characterised by** the fact that the scale support (16) is cut from top to bottom and, owing to its diametrical resilience, can be snapped over the inspection glass (10).

4. Flowmeter according to claim 1, **characterised by** the fact that the marked cut faces (20, 40) of the scale support (16, 36) are inclined in relation to its longitudinal axis (24).

5. Flowmeter according to any one of the preceding claims, **characterised by** the fact that the inspection glass (30) takes the form of a rotating, ascending spindle placed in a fixed guide part (31) with an internal thread (46), whereby the scale support (36) can be moved axially along the guide part (31) and rotated, and further **characterised in that** the end of the inspection glass adjacent to the measuring part (2') bears the gasket (34) of a valve (34, 35) which controls the measured flow rate.

## Revendications

1. Débitmètre, destiné notamment aux installations de chauffage à l'eau chaude, comportant un système de mesure (2, 2') ainsi qu'un système indicateur (3, 3') avec un verre indicateur (10, 30) transparent tubulaire, dans le perçage (12) duquel une tige indicatrice (6) reliée au système de mesure est guidée longitudinalement, **caractérisé par** un support d'échelle (16, 36) conçu essentiellement en forme de douille, disposé autour du verre indicateur (10, 30), qui est fixé par rapport au verre indicateur dans le sens axial, mais réglable en rotation, et qui présente une encoche latérale (18, 38) dégageant la vue sur le verre indicateur et la tige indicatrice, une échelle étant marquée sur les sections (20, 40) de l'encoche voisines du verre indicateur (10, 30).

2. Débitmètre selon la revendication 1, **caractérisé par le fait que** le verre indicateur (10, 30) comporte une rainure annulaire (13) ou un épaulement circulaire radial (32), dans ou sur lequel coulisse une partie (22, 42) du support d'échelle (16, 36) s'encliquetant dans le sens radial.

3. Débitmètre selon la revendication 2, **caractérisé par le fait que** le support d'échelle (16) est découpé sur toute la hauteur, est élastique en diamètre, et peut ainsi s'encliqueter sur le verre indicateur (10).

4. Débitmètre selon la revendication 1, **caractérisé par le fait que** les sections marquées (20, 40) sur le support d'échelle (16, 36) sont inclinées par rapport à l'axe longitudinal (24) de ce dernier.

5. Débitmètre selon l'une des revendications précédentes, **caractérisé par le fait que** le verre indicateur (30) est conçu comme une broche rotative montante et se loge dans une partie de guidage (31) fixe, doté d'un filetage intérieur (46), le support d'échelle (36) étant déplaçable par rapport à la partie de guidage dans le sens axial et réglable en rotation, et que l'extrémité du verre indicateur tournée vers le système de mesure (2') supporte le corps de fermeture (34) d'une vanne (34, 35) réglant le débit mesuré.
